# EUROPÄISCHE PATENTSCHRIFT

(11) **EP 0 284 941 B1**
(45) Veröffentlichungstag und Bekanntmachung des Hinweises auf die Patenterteilung: **10.11.1993**
(21) Anmeldenummer: 88104472.1
(22) Anmeldetag: 21.03.1988
(51) Int. Cl.: H01H 15/14, G06K 11/06

(54) **Elektrische Stellungsanzeigevorrichtung**
Electrical position indication device
Dispositif électrique d'indication de position

(30) Priorität: 01.04.1987 DE 3710987
(43) Veröffentlichungstag der Anmeldung: 05.10.1988
(73) Patentinhaber: Müller, Fritz, D-74653 Ingelfingen (DE)
(72) Erfinder: Müller, Fritz, D-74653 Ingelfingen (DE)
(74) Vertreter: Leyh, Hans, Dr.-Ing.

(56) Entgegenhaltungen:
- DE-A- 1 763 107
- DE-C- 1 540 467
- DE-U- 7 130 884
- US-A- 3 703 616

## Beschreibung

Die Erfindung befaßt sich mit einer elektrischen Stellungsanzeigevorrichtung der im einleitenden Teil des Patentanspruchs 1 angegebenen Art.

Aus DE-A-1 763 107 ist eine elektromotorische Antriebsvorrichtung für Oberlichtöffner oder dergleichen bekannt, welche einen länglich ausgebildeten Bauelemententräger hat, welcher lediglich die Schaltelemente trägt. Anklemmstellen sind dort weder gezeigt noch beschrieben. Die elektrische Versorgung und die Steuerleitungen zu diesen Schaltelementen sind auf übliche Weise als relativ lange und aus dem Gehäuse herausgeführte Leitungen verlegt und dann mit den entsprechenden Anschlußklemmstellen verbunden, welche außerhalb des Gehäusekörpers liegen. Hierbei ist die Auslegung derart getroffen, daß die Antriebsvorrichtung in Breitenrichtung möglichst wenig Bauraum in Anspruch nimmt, während sie eine relativ große Längserstreckung hat, so daß die entsprechenden Teile der elektromotorischen Antriebsvorrichtung über die Länge verteilt hinweg hintereinander angeordnet werden können.

Elektrische Stellungsanzeigevorrichtungen der vorstehend genannten Art nehmen viel Platz in Anspruch und haben in Relation zu den Einrichtungen, an denen sie angeschlossen sind, große Bauabmessungen, die zu einem entsprechend voluminösen Bauteil für die elektrische Stellungsanzeige führen. Es besteht daher ein Bedürfnis, das Bauvolumen derartiger Elektrischer Stellungsanzeigevorrichtungen zu reduzieren, ohne funktionelle Nachteile hinsichtlich Genauigkeit und dergleichen in Kauf zu nehmen.

Demgegenüber liegt der Erfindung die Aufgabe zugrunde, eine elektrische Stellungsanzeigevorrichtung der gattungsgemäßen Art bereitzustellen, welche sowohl hinsichtlich den Grundabmessungen als auch hinsichtlich der Bauhöhe in nennenswertem Maße verkleinert ist und eine kostengünstige Herstellung und Montage gestattet.

Nach der Erfindung wird hierzu eine elektrische Stellungsanzeigevorrichtung bereitgestellt, welche im Patentanspruch 1 angegeben ist.

Bei der erfindungsgemäßen elektrischen Stellungsanzeigevorrichtung dient der Bauelemententräger als tragendes und gesondertes Bauteil für das Anbringen aller mechanischen und elektrischen Bauelemente der Stellungsanzeigevorrichtung, und er bildet daher die zentrale Einheit der elektrischen Stellungsanzeigevorrichtung. Durch diese Ausbildung wird erreicht, daß die funktionsnotwendigen Bauelemente platzsparend und kompakt unter optimaler Ausnutzung des vorhandenen Raumes angeordnet werden können. Ferner lassen sich die Bauelemente auch an dem Bauelemententräger insgesamt vormontieren, so daß sich auch die Montage und die Herstellung einer solchen Vorrichtung vereinfachen, da nämlich dann nur noch der Bauelemententräger mit den bereits angebrachten Bauelementen fest mit dem Grundkörper beispielsweise unter Verwendung von Schrauben verbunden zu werden braucht. Wenn der Bauelemententräger auf dem Grundkörper befestigt ist, sind die Schaltelemente auf einer Seite des Grundkörpers und die Anklemmstellen auf der gegenüberliegenden Seite desselben zusammengefaßt. Die Anklemmstellen werden beispielsweise von Klemmleisten oder dergleichen gebildet. Hierbei sind auf einer Seite des Grundkörpers die mit dem beweglichen Element zusammenarbeitenden Schaltelemente und auf der anderen Seite die Anschlußverbindungen für die elektrische Stellungsanzeigevorrichtung zusammengefaßt. Insbesondere unter Berücksichtigung einer günstigen Herstellungsweise ist der Bauelemententräger so beschaffen, daß er eine durch die Mitte des Grundkörpers gehende Symmetrieebene hat. Durch diese symmetrische Ausbildung des Bauelemententrägers können kostengünstige Herstellungstechniken für seine Fertigung angewandt werden. Da der Bauelemententräger das bewegliche Element umgibt, besitzt er zwar eine ausreichende Eigensteifigkeit, er nimmt aber dennoch relativ wenig Grundfläche in Anspruch.

Eine besonders kompakte Bauweise erhält man dann, wenn der Grundkörper, der die Baugrundfläche vorgibt, in der Draufsicht eine viereckähnliche Form hat. Zweckmäßiger Weise ist dieses Viereck zur Optimierung einem Quadrat angenähert.

Vorzugsweise ist der Bauelemententräger derart ausgebildet, daß seine die Bauelemente tragenden Wände etwa in Richtung der Ecken des viereckförmigen Grundkörpers weisen. Hierbei erhält man vorzugsweise eine sternformähnliche Anordnung der die Bauelemente tragenden Wände des Bauelemententrägers, wobei der Raum zwischen den Diagonalen des Vierecks optimal für die Unterbringung der Bauelemente genutzt werden kann.

Um ein möglichst genaues und zuverlässiges Zusammenarbeiten der Schaltelemente mit dem sich hin- und hergehend beweglichen Elements zu gewährleisten, erstrecken sich die die Schaltelemente tragenden Wände des Bauelemententrägers, bezogen auf die Mitte des Grundkörpers, divergierend in Richtung der Ecken, so daß diese Schaltelemente in einer etwa gestürzt V-förmigen Anordnung auf das bewegliche Element gerichtet sind.

Um für die Unterbringung der Anklemmstellen, wie der Klemmleisten, die vorhandene Grundfläche so zu nutzen, daß sie selbst bei einer kompakten Bauweise noch unbehindert zugänglich sind, verlaufen die die Anklemmstellen tragenden Wände des Bauelemententrägers, bezogen auf die Mitte des Grundkörpers, konvergierend und sie schließen vorzugsweise etwa einen Winkel von 90° ein, wobei die Winkelspitze in Richtung einer der Seiten des viereckigen Grundkörpers weist.

Im Querschnitt hat der Bauelementen träger zwei gegenüberliegende, parallele und tangential zum beweglichen Element angeordnete Abschnitte hat, an deren einen Enden sich vorzugsweise gestürzt V-förmig Abschnitte für die die Anklemmstellen tragenden Wände und an den anderen Enden sich die divergierend verlaufenden Abschnitte für die die Schaltelemente tragenden Wände anschließen.

Die Schaltungsplatten für die Verschaltung der elektrischen Bauelemente, die eine relativ große Grundfläche haben, werden vorzugsweise bei der erfindungsgemäßen elektrischen Stellungsanzeigevorrichtung etwa senkrecht zu den die Bauelemente tragenden Wänden am Bauelemententräger angebracht, so daß sie etwa parallel zur Grundfläche des Grundkörpers im angebrachten Zustand verlaufen. Vorzugsweise sind die Schaltungsplatten am Bauelemententräger derart angebracht, daß die beiden gegenüberliegenden und die Anklemmstellen tragenden Wände des Bauelemententrägers überspannt werden. Somit sind diese Schaltungsplatten möglichst nahe an den Anklemmstellen angeordnet, um die elektrischen Verbindungswege möglichst kurz zu halten.

Vorzugsweise ist der Bauelemententräger einstückig und insbesondere aus Kunststoff hergestellt, so daß man bei der Herstellung der elektrischen Stellungsanzeigevorrichtung möglichst wenige miteinander zu verbindende Bauteile hat.

Gemäß einer bevorzugten Ausbildungsform nach der Erfindung werden die die Stellung des beweglichen Elements erfassenden Schaltelemente von Rollenschaltern gebildet, deren Schaltrollen auf der Oberfläche des beweglichen Elements laufen.

Gemäß einer alternativen Ausbildungsform können die die Stellung des beweglichen Elements erfassenden Schaltelemente von elektrischen Näherungsschaltern gebildet werden, die mit dem beweglichen Element berührungslos zusammenarbeiten.

Derartige Näherungsschalter jedoch benötigen einen Verstärkerteil zur Signalverstärkung, der relativ voluminös ist und daher Schwierigkeiten bei der Unterbringung direkt am Näherungsschalter bereitet. Vorzugsweise ist bei der Erfindung dieser Verstärkerteil in das Anschlußkabel des Näherungsschalters von diesem entfernt integriert, so daß der Verstärkerteil an irgendeiner Stelle plaziert werden kann, an der noch Platz für ein voluminöses Teil ist, wie z.B. in der Nähe der Ecken oder zwischen den sternförmig verlaufenden Tragwänden des Bauelemententrägers.

Vorzugsweise ist zum Schutz der elektrischen Stellungsanzeigevorrichtung ein becherförmiges Gehäuseteil vorgesehen, das einen dem Grundkörper entsprechenden Querschnitt d.h. viereckförmig, hat, der den Bauelemententräger mit den daran angebrachten Bauelementen umgibt und auf dem Grundkörper befestigt ist. Zur Funktionsüberprüfung ist dieses becherförmige Gehäuseteil vorzugsweise durchsichtig ausgebildet sowie zweckmäßigerweise aus Kunststoff hergestellt.

Die Erfindung wird nachstehend an bevorzugten Ausführungsbeispielen unter Bezugnahme auf die beigefügte Zeichnung näher erläutert. Darin zeigt:
- Fig. 1: einen Seitenansicht einer elektrischen Stellungsanzeigevorrichtung in Teilschnittdarstellung gemäß einer ersten bevorzugten Ausbildungsform, bei der Rollenschalter vorgesehen sind,
- Fig. 2: eine Draufsicht auf die elektrische Stellungsanzeigevorrichtung nach Fig. 1,
- Fig. 3: eine Seitenansicht eines Bauelemententrägers der erfindungsgemäßen elektrischen Stellungsanzeigevorrichtung ohne angebrachte Bauelemente zur Verdeutlichung seiner Grundbauform,
- Fig. 4: eine Draufsicht auf den Bauelemententräger von Fig. 3,
- Fig. 5: eine Querschnittsansicht des Bauelemententrägers nach den Fig. 3 und 4,
- Fig. 6: eine Fig. 1 ähnliche Ansicht eines zweiten bevorzugten Ausführungsbeispieles einer elektrischen Stellungsanzeigevorrichtung, bei der Näherungsschalter vorgesehen sind, und
- Fig. 7: eine Draufsicht auf die elektrische Stellungsanzeigevorrichtung nach Fig. 6.

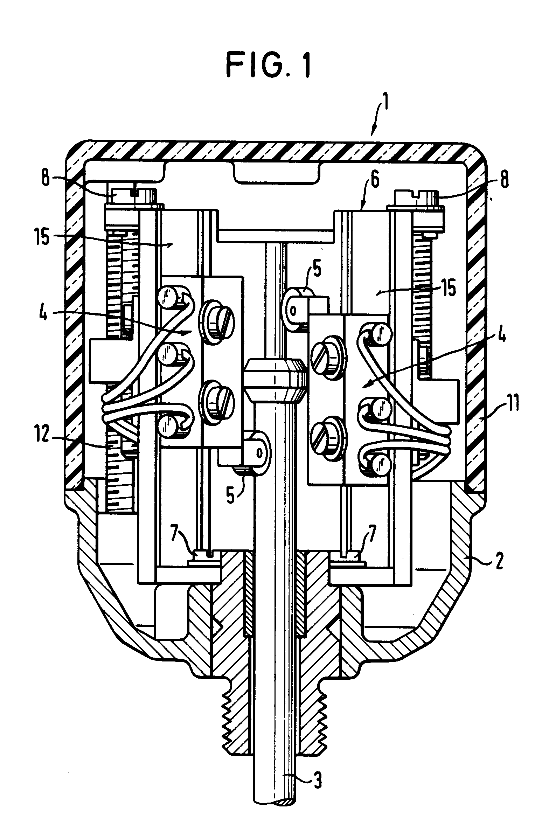

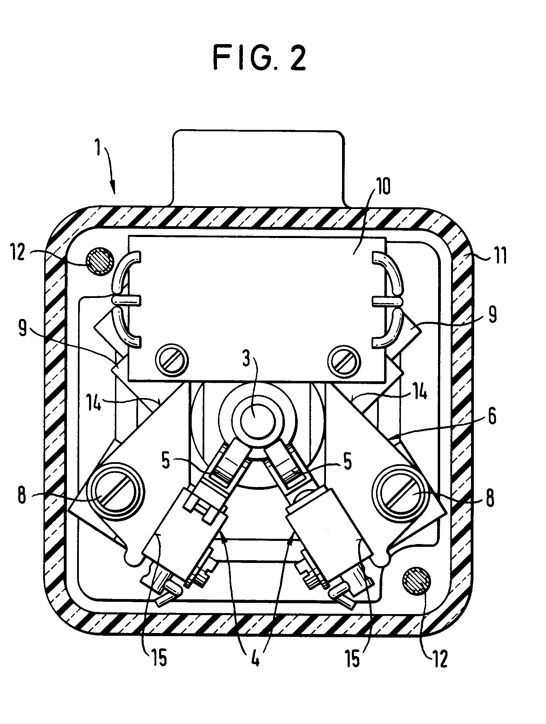

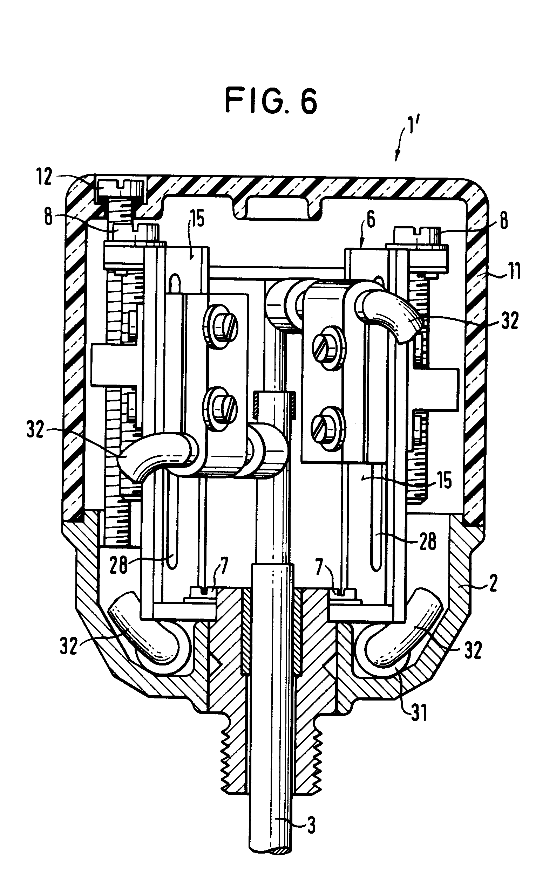

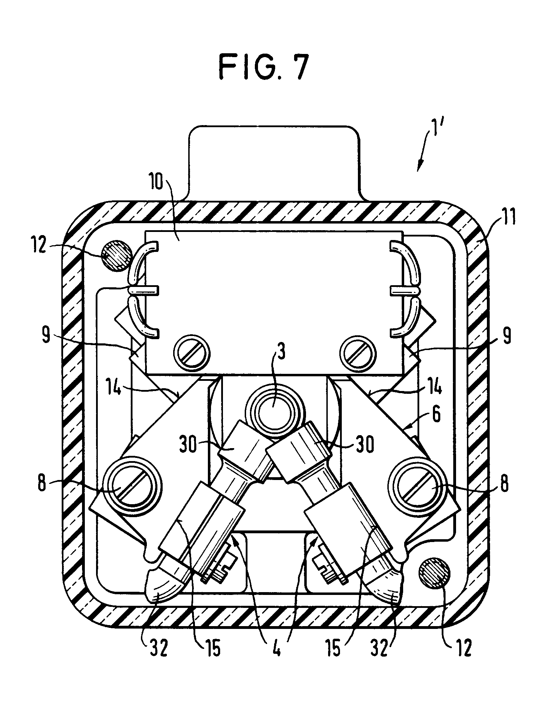

In den Figuren der Zeichnung sind gleiche oder ähnliche Teile mit denselben Bezugszeichen versehen, wobei das zweite Ausführungsbeispiel nach den Fig. 6 und 7 nur hinsichtlich den Unterschieden zu der ersten Ausbildungsform nach den Fig. 1 und 2 erläutert wird.

In den Figuren der Zeichnung ist die elektrische Stellungsanzeigevorrichtung insgesamt mit 1 bezeichnet. Sie weist einen Grundkörper 2 auf, der beim dargestellten Beispiel eine viereckige, vorzugsweise quadratische Grundfläche bildet. In der Mitte des Grundkörpers 2 ist ein hin- und hergehend bewegliches Element 3 angeordnet, dessen Stellung erfaßt werden soll und das an der Bodenseite des Grundkörpers 2 geführt ist. Das bewegliche Element 3 ist ähnlich einer Kolbenstange ausgebildet. Dem beweglichen Element 3 sind Schaltelemente 4 zugeordnet, die bei dem in Fig. 1 and 2 gezeigten Beispiel von Rollenschaltern gebildet werden, die auf der Oberfläche des beweglichen Elements 3 laufen. Die Rollen sind mit 5 bezeichnet.

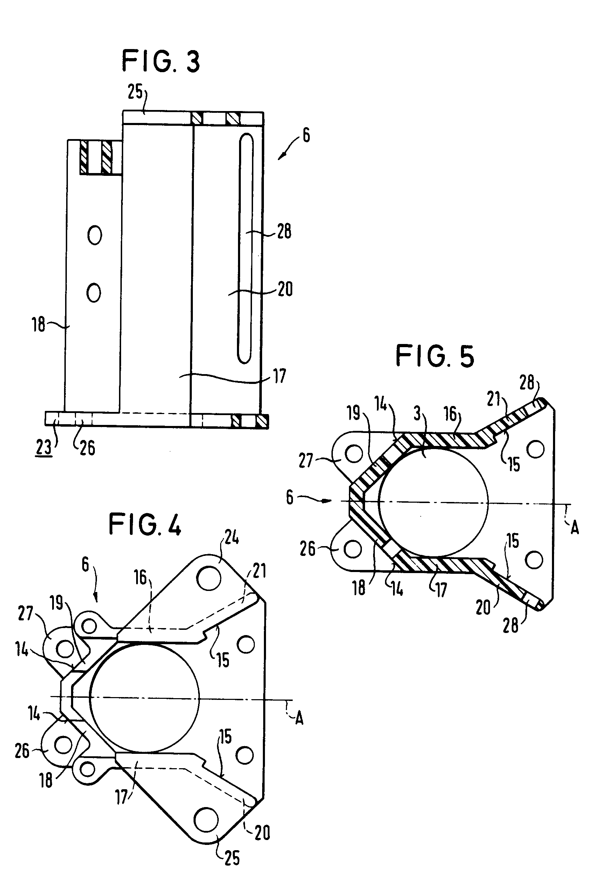

An dem Grundkörper 2 ist ein insgesamt mit 6 bezeichneter Bauelemententräger beispielsweise mit Schrauben 7 und 8 befestigt. Dieser Bauelemententräger 6, der nachstehend in Verbindung mit den Fig. 3 bis 5 als separates Bauteil hinsichtlich seiner Ausbildungsform noch näher erläutert wird, trägt die Schaltelemente 4, wie die Rollenschalter, Anklemmstellen 9, die beispielsweise von Anschlußklemmleisten gebildet werden, und Schaltungsplatten 10, von denen eine beispielsweise in Fig. 2 zu ersehen ist. Die Schaltungsplatten 10 dienen zur Verschaltung der elektrischen Stellungsanzeigevorrichtung 1. Die Bestückung dieser Schaltungsplatten 10 wird nicht näher erläutert, da sie sich von Anwendungsfall zu Anwendungsfall ändern kann und an sich übliche elektrische Bauelemente miteinander verknüpft werden.

Wie sich insbesondere aus Fig. 2 ersehen läßt, sind die Wände des Bauelemententrägers 6, an denen die Bauelemente befestigt werden, so ausgerichtet, daß sie in Richtung der Ecken der viereckigen Grundfläche des Grundkörpers 2 weisen. Um die Anordnung, bestehend aus Grundkörper 2 und Bauelemententräger 6, ist, wie aus den Fig. 1 und 2 zu ersehen ist, ein becherförmiges Gehäuseteil angeordnet, das zweckmäßigerweise aus durchsichtigem Kunststoff besteht, und das beispielsweise mit Hilfe von zwei diagonal gegenüberliegenden Schrauben 12 fest mit dem Grundkörper 2 verbunden ist. Das becherförmige Gehäuseteil 11 hat, wie insbesondere aus Fig. 2 zu ersehen ist, etwa die gleiche Grundfläche wie der Grundkörper 2 und ist somit im Querschnitt ebenfalls viereckförmig ausgebildet.

Wie aus Fig. 2 zu ersehen ist, ist gemäß der bevorzugten Anordnung nach der Erfindung diese so getroffen, daß die Schaltelemente 4 auf einer Seite, in Fig. 2 der unteren Seite,des viereckigen Grundkörpers 2 zusammengefaßt sind, während die Anklemmstellen 9 hierzu gegenüberliegend angeordnet sind und somit auf der gegenüberliegenden Seite des viereckigen Grundkörpers 2 zusammengefaßt sind. Die Schaltungsplatte 10 ist etwa parallel zur Grundfläche des Grundkörpers 2 angeordnet und überspannt den Bereich der Anklemmstellen 9 sowie jene insgesamt mit 14 bezeichneten Wände des Bauelemententrägers 6, die für die Anbringung der Anklemmstellen bestimmt sind. Die Wände des Bauelemententrägers 6, die für die Anbringung der Schaltelemente 4 bestimmt sind, sind schematisch in Fig. 2 mit 15 bezeichnet.

Wie sich aus Fig. 2 deutlich ersehen läßt, sind bei der erfindungsgemäßen elektrischen Stellungsanzeigevorrichtung 1 die funktionsnotwendigen Bauteile, wie Schaltelemente 4, Anklemmstellen 9 und Schaltungsplatten 10 raumsparend und kompakt in sternähnlicher Weise um das zentrale sich hin- und hergehend bewegliche Element 3 mit Hilfe des Bauelemententrägers 6 angeordnet. Der Bauelemententräger 6 mit den daran angebrachten Bauelementen ist zu einer vormontierbaren Einheit zusammengefaßt, so daß der Bauelemententräger 6 nach der Anbringung der erforderlichen Bauelemente in einem Arbeitsschritt an dem Grundkörper 2 der elektrischen Stellungsanzeigevorrichtung 1 angebracht werden kann. In einem daran anschließenden Herstellungsschritt wird dann das becherförmige Gehäuseteil 11 auf die so gebildete Anordnung von Grundkörper 2 und Bauelemententräger 6 aufgesetzt und mit Hilfe der Schrauben 12 mit dem Grundkörper 2 verschraubt.

Nachstehend wird anhand den Fig. 3 bis 5 eine bevorzugte Ausbildungsform des insgesamt mit 6 bezeichneten Bauelemententrägers näher erläutert. Hierbei soll von Fig. 5 ausgegangen werden, die den Bauelemententräger 6 in einer Querschnittsansicht zeigt. Der Bauelemententräger 6 umgibt das mit einem Kreis in Fig. 5 dargestellte bewegliche Element 3 und ist vorzugsweise einteilig aus Kunststoff gefertigt. Im Querschnitt hat der Bauelemententräger 6 zwei gegenüberliegende etwa parallele Abschnitte 16, 17, die tangential zu dem Grundkreis des beweglichen Elements 3 verlaufen. In Fig. 5 nach oben gesehen schließen sich hieran in gestürzt V-förmiger Anordnung mit abgeflachter V-Spitze zwei konvergierende Abschnitte 18, 19 an, die die Wände 14 für die Anklemmstellen 9 bilden und die etwa einen Spitzenwinkel von 90° einschließen. Am gegenüberliegenden Ende der parallelen Abschnitte 16, 17 geht der Querschnitt des Bauelemententrägers 6 in zwei divergierende Abschnitte 20, 21 über, die in Verbindung mit Fig. 2 der Zeichnung in Richtung der Ecken des Grundkörpers 2 weisen und die Wände 15 für die Anbringung der Schaltelemente 4 bilden. Die Abschnitte 18 und 19 und die Abschnitte 20 und 21 weisen jeweils Durchgangsöffnungen oder längliche Durchgangsschlitze auf, die zur Befestigung der jeweiligen anzubringenden Bauelemente dienen. Die ferner noch in Fig. 5 gezeigten Bohrungen, die etwa in einem Viereck zueinander angeordnet sind, sind in einem Fußteil 23 des Bauelemententrägers 6 ausgebildet, der insbesondere in Fig. 3 zu ersehen ist, und mit Hilfe dieser Öffnungen wird der Bauelemententräger 6 mit dem Grundkörper 2 der elektrischen Stellungsanzeigevorrichtung 1 unter Verwendung von Schrauben 7 befestigt, die aus Fig. 1 zu ersehen sind.

Im in Fig. 3 obenliegenden Bereich des Bauelemententrägers 6 sind zwischen den parallelen Abschnitten 16 und 17 und den divergierend verlaufenden Abschnitten 20 und 21 flügelförmige Fortsätze 24, 25 angeformt, die ebenfalls Durchgangsöffnungen tragen, durch die Schrauben 8 (siehe Fig. 1 und 2) gehen, die auch zur Befestigung des Bauelemententrägers 6 am Grundkörper 2 dienen. An der Übergangsstelle von den parallelen Abschnitten 16, 17 zu den konvergierend verlaufenden Abschnitten 18, 19 sind Ansätze 26, 27 im oberen Teil des Bauelemententrägers 6 angeformt, die zur Auflage und Befestigung einer beispielsweise in Fig. 2 gezeigten Schaltungsplatte 10 dienen.

Wie aus den Fig. 4 und 5 zu ersehen ist, hat der Bauelemententräger 6 im Querschnitt eine mit A bezeichnete Symmetrieebene, die durch das Zentrum des beweglichen Elements 3 geht.

Wie aus Fig. 3 in Verbindung mit Fig. 1 zu ersehen ist, weisen die divergierend verlaufenden Abschnitte 20, 21, die die Wände 15 für die Schaltelemente 4 bilden, jeweils einen Längsschlitz 28 auf, so daß die Schaltelemente 4 höhenverstellbar an den divergierenden Abschnitten 20, 21 so angebracht werden können, daß sie zuverlässig mit dem beweglichen Element 3, dessen Stellung zu erfassen ist, zusammenarbeiten können. Die in Fig. 2 gezeigte Schaltungsplatte 10 überspannt somit an der Oberseite des Bauelemententrägers 6 die beiden konvergierend verlaufenden Abschnitte 18, 19, die die Wände 14 für die Anklemmstellen 9 bilden. Die Schaltungsplatte 10 ist somit etwa senkrecht zu diesen Wänden 14, 15 angeordnet, um auch den oberen Bereich des Bauelemententrägers 6 hinsichtlich seiner Flächenerstreckung optimal auszunutzen.

In den Fig. 6 und 7 ist in einer den Fig. 1 und 2 ähnlichen Darstellung eine Ausführungsvariante einer elektrischen Stellungsanzeigevorrichtung gezeigt, die zur Unterscheidung zu dem ersten Ausführungsbeispiel insgesamt mit 1' bezeichnet ist. Diese elektrische Stellungsanzeigevorrichtung 1' stimmt weitgehend mit den vorangehend erläuterten Ausbildungsformen von Grundkörper 2,beweglichem Element 3 und Bauelemententräger 6 überein, die daher an dieser Stelle nicht mehr näher erläutert zu werden brauchen. Im Unterschied zu dem Beispiel nach den Fig. 1 und 2 weist die elektrische Stellungsanzeigevorrichtung 1' nach den Fig. 6 und 7 als Schaltelemente 4 keine Rollenschalter, sondern Annäherungsschalter auf, die dem beweglichen Element 3 zur Erfassung seiner Stellung zugeordnet sind. Diese Annäherungsschalter 30 sind ähnlich wie die Rollenschalter bei dem vorangehenden Ausführungsbeispiel an den divergierend verlaufenden Wänden 15 angebracht, die von den im Querschnitt des Bauelemententrägers 6 ebenfalls divergierend verlaufenden Abschnitten 20, 21 gebildet werden. Solche Annäherungsschalter 30 besitzen üblicherweise ein Verstärkerteil 31 zur Signalverstärkung, das relativ viel Platz in Anspruch nimmt. Bei der erfindungsgemäßen elektrischen Stellungsanzeigevorrichtung 1' ist das Verstärkerteil 31 in einem Abschnitt des Verbindungskabels 32 integriert, der von dem Annäherungsschalter 30 einen Abstand hat. Daher kann der relativ voluminöse Verstärkerteil 31 so in dem vom becherförmigen Gehäuseteil 11 umschlossenen Raum angeordnet werden, daß das Verstärkerteil 31 in einem Abstand von der Befestigungsstelle des Annäherungsschalters 30 an der Wand 15 liegt und beispielsweise in den beiden unteren Eckbereichen in der Fig. 7 zu liegen kommt, um diesen an sich sonst toten Eckraum oder auch andere Freiräume um den Bauelemententräger 6 auszunutzen.

Selbstverständlich sind im Rahmen der Erfindung noch Abänderungen im Vergleich zu den dargestellten bevorzugten Ausführungsbeispielen möglich, wobei beispielsweise der Grundkörper 2 und/oder das zugeordnete becherförmige Gehäuseteil einen anderen als den dargestellten Querschnitt, wie z.B. oval oder eine Kombination von eckig und oval, oder kreisförmig oder Kombinationen hiervon haben. Auch können selbstverständlich auch andere Bauarten von Schaltelementen 4 angebracht werden, was von dem jeweiligen Anwendungszweck abhängig ist. Auch die Anklemmstellen 9 können von anderen Bauelementen als den dargestellten Beispielen gebildet werden.

## Patentansprüche

1. Elektrische Stellungsanzeigevorrichtung mit einem Grundkörper (2), in dessen Mitte ein seine Stellung veränderndes Element (3) hin- und hergehend beweglich angeordnet ist, dem Schaltelemente (4) zur Positionserfassung zugeordnet sind, welche an einem Bauelemententräger (6) vorgesehen sind, der als ein gesondertes und am Grundkörper (2) befestigbares Bauteil ausgebildet ist, **dadurch gekennzeichnet**, daß der Bauelemententräger (6) das bewegliche Element (3) umgibt und eine durch die Mitte des Grundkörpers (2) gehende Symmetrieebene (A) derart hat, daß bei auf dem Grundkörper (2) befestigtem Bauelemententräger (6) die Schaltelemente (4) bei einer Seitenfläche des Grundkörpers (2) und die Anklemmstellen (9) bei der hierzu gegenüberliegenden Seitenfläche desselben zusammengefaßt angeordnet sind, und daß der Bauelemententräger (6) im Querschnitt zwei gegenüberliegende etra parallele Abschnitte (16, 17) hat, die tangential zu dem Grundkreis des beweglichen Elements (3) verlaufen.

2. Elektrische Stellungsanzeigevorrichtung nach Anspruch 1, dadurch gekennzeichnet, daß der Grundkörper (2) eine viereckähnliche Form hat.

3. Elektrische Stellungsanzeigevorrichtung nach Anspruch 2, dadurch gekennzeichnet, daß der Bauelemententräger (6) derart ausgebildet ist, daß seine die Bauelemente tragenden Wände (14, 15) etwa in Richtung der Ecken des viereckigen Grundkörpers (2) weisen.

4. Elektrische Stellungsanzeigevorrichtung nach Ansprüche 2 oder 3, dadurch gekennzeichnet, daß die die Schaltelemente (4) tragenden Wände (15) des Bauelemententrägers (6), bezogen auf die Mitte des Grundkörpers (2), divergierend in Richtung der Ecken verlaufen.

5. Elektrische Stellungsanzeigevorrichtung nach einem der Ansprüche 2 bis 4, dadurch gekennzeichnet, daß die die Anklemmstellen (9) tragenden Wände (14) des Bauelemententrägers (6), bezogen auf die Mitte des Grundkörpers (2) konvergierend verlaufen.

6. Elektrische Stellungsanzeigevorrichtung nach einem der vorangehenden Ansprüche, dadurch gekennzeichnet, daß sich an den eine Enden der Abschnitte (16, 17) gestürzt V-förmig Abschnitte (18, 19) für die die Anklemmstellen (9) tragenden Wände (14) und an den anderen Enden divergierend verlaufende Abschnitte (20, 21) für die die Schaltelemente (4) tragenden Wände (15) anschließen.

7. Elektrische Stellungsanzeigevorrichtung nach einem der vorangehenden Ansprüche, dadurch gekennzeichnet, daß die Schaltungsplatten (10) etwa senkrecht zu den die Bauelemente tragenden Wänden (14, 15) am Bauelemententräger (6) angebracht sind.

8. Elektrische Stellungsanzeigevorrichtung nach Anspruch 7, dadurch gekennzeichnet, daß die Schaltungsplatten (10) die beiden gegenüberliegenden und die Anklemmstellen (9) tragenden Wände (14) des Bauelemententrägers (6) überspannend angeordnet sind.

9. Elektrische Stellungsanzeigevorrichtung nach einem der vorangehenden Ansprüche, dadurch gekennzeichnet, daß der Bauelemententräger (6) einstückig, vorzugsweise aus Kunststoff, hergestellt ist.

10. Elektrische Stellungsanzeigevorrichtung nach einem der vorangehenden Ansprüche, dadurch gekennzeichnet, daß die die Stellung des beweglichen Elements (3) erfassenden Schaltelemente (4) Rollenschalter sind (Fig. 1 und 2).

11. Elektrische Stellungsanzeigevorrichtung nach einem der Ansprüche 1 bis 9, dadurch gekennzeichnet, daß die die Stellung des beweglichen Elements (3) erfassenden Schaltelemente (4) Annäherungsschalter (30) sind (Fig. 6 und 7).

12. Elektrische Stellungsanzeigevorrichtung nach Anspruch 11, dadurch gekennzeichnet, daß die Annäherungsschalter (30) Näherungsinitiatoren aufweisen und ein Verstärkerteil (31) im Verbindungskabel (32) der Näherungsinitiatoren von diesem entfernt integriert ist.

13. Elektrische Stellungsanzeigevorrichtung nach einem der vorangehenden Ansprüche, dadurch gekennzeichnet, daß der Bauelemententräger (6) mit den daran angebrachten Bauelementen von einem becherförmigen Gehäuseteil (11) umgeben ist, das im Querschnitt entsprechend dem Grundkörper (2) viereckig ausgebildet ist und auf dem Grundkörper (2) befestigt ist.

14. Elektrische Stellungsanzeigevorrichtung nach Anspruch 13, dadurch gekennzeichnet, daß das becherformige Gehäuseteil (11) durchsichtig ist.

15. Elektrische Stellungsanzeigevorrichtung nach Anspruch 13 oder 14, dadurch gekennzeichnet, daß das becherformige Gehäuseteil (11) aus Kunststoff hergestellt ist.

## Claims

1. Electrical position indicator comprising a base body (2) in the middle of which is located an element (3) changing its position in an alternate motion and to which are allocated switching elements (4) for the position transmission provided at a component support (6) conceived as a particular component able to be fixed at the base body (2), comprising:
a component support (6) surrounding the mobile element (3) and presenting a plane of symmetry (A) passing trough the middle of the base body (2) in a manner that with the component support (6) fixed at the base body (2) the switching elements (4) are located at a side face of the base body (2) just as the squeeze points (9) at the opposite side face and that the component support (6) comprises in the cross section two opposite and nearly parallel sections (16, 17) passing tangentially to the base cercle of the mobile element (3).

2. Electrical position indicator according to claim 1 wherein the base body (2) presents a nearly square shape.

3. Electrical position indicator according to claim 2 wherein the component support (6) is shaped in a manner that the walls (14, 15) carrying the components are more or less directed to the edges of the square base body.

4. Electrical position indicator according to claim 2 or 3 wherein the walls (15) carrying the switching elements of the component support (6) referred to the middle of the base body (2) follow divergently the direction of the edges.

5. Electrical position indicator according to one of the claims 2 to 4, wherein the walls (14) carrying the squeeze points (9) of the component support (6) referred to the middle of the base body (2) are directed convergently.

6. Electrical position indicator according to one of the preceding claims wherein at one of the extremities of the sections (16, 17) are connected V-shaped sections (18, 19) for the walls (14) carrying the squeezing points (9) and at the other extremities divergent sections (20, 231) for the walls (15) carrying the switching elements (4).

7. Electrical position indicator according to one of the preceding claims wherein the switching plates (10) are located more or less vertically to the walls (14, 15) carrying the components at the component support (6).

8. Electrical position indicator according to claim 7 wherein the switching plates (10) and the two opposite walls (14) carrying the squeezing points (9) of the component support (6) are located in a covered manner.

9. Electrical position indicator according to one of the preceding claims wherein the component support (6) in one piece is produced preferably of plastic.

10. Electrical position indicator according to one of the preceding claims wherein the switching elements (4) detecting the position of the mobile element (3) are roller switches (fig. 1 and 2).

11. Electrical position indicator according to one of the claims 1 to 9 wherein the switching elements (4) detecting the position of the mobile element (3) are proximity switches (30) (fig. 6 and 7).

12. Electrical position indicator according to claim 11 wherein the proximity switches (30) comprise proximity indicators and the amplifier section (31) in the connection cable (32) of the proximity initiators is integrated at a certain distance.

13. Electrical position indicator according to one of the preceding claims wherein the component support (6) with the located components is surrounded by a cupular housing section (11) the section of which is square according to the base body (2) and fixed on the base body (2).

14. Electrical position indicator according to claim 13 wherein the cupular housing section (11) is transparent.

15. Electrical position indicator according to claim 13 or 14 wherein the cupular housing section (11) is fabricated of plastic.

## Revendications

1. Equipement électrique d'affichage de position avec un corps de base (2) au milieu duquel se trouve un élément (3) de position de va-et-vient et auquel sont affectés des éléments de commande (4) pour le relèvement de position prévus sur un support de composants (6) conçu sous forme d'un composant séparé et fixable au corps de base (2), **caractérisé par le fait** que le support de composants (6) entoure l'élément mobile (3) et qu'il comporte un plan de symétrie (A) passant au milieu du corps de base (2) de manière à ce que pour le supports de composants (6) fixé sur le corps de base (2) les éléments de commande (4) sont aménagés à une surface latérale du corps de base (2) et les points de serrage (9) à une surface latérale opposée et que le support de composants (6) présente dans la section deux sections parallèles opposées (16, 17) qui sont orientées tangentiellement au cercle fondamental de l'élément mobile (3).

2. Equipement électrique d'affichage de position selon la revendication 1, caractérisé en ce que le corps de base (2) présente une forme similairement carrée.

3. Equipement électrique d'affichage de position selon la revendication 2, caractérisé en ce que le support de composants (6) est conçu de manière à ce que les parois supportant les composants (14, 15) sont dirigées plus ou moins dans le sens des coins du corps de base carré (2).

4. Equipement électrique d'affichage de position selon la revendication 2 ou 3, caractérisé en ce que les parois (15) supportant les éléments de commande (4) du support de composants (6), référées au centre du corps de base (2) se dirigent de manière divergente vers les coins.

5. Equipement électrique d'affichage de position selon une des revendications 2 à 4, caractérisé en ce que les parois (14) supportant les points de serrage (9) du support de composants (6), référées au centre du corps de base (2) se dirigent de manière convergente.

6. Equipement électrique d'affichage de position selon une des revendications précédentes, caractérisé en ce que sur une des extrémités des sections (16, 17) se raccordent des sections en V (18, 19) pour les parois (14) supportant les endroits de serrage (9) et aux autres extrémités de manière des sections divergentes (20, 21) pour les parois (15) supportant les éléments de commande.

7. Equipement électrique d'affichage de position selon une des revendications précédentes, caractérisé en ce que les platines de commande (10) sont montées pratiquement verticalement aux parois (14, 15) supportant les composants sur le support de composants (6).

8. Equipement électrique d'affichage de position selon la revendication 7, caractérisé en ce que les platines de commande (10) et les parois (14) supportant les endroits de serrage opposés (9) du support de composants (6) sont aménagées de manière superposée.

9. Equipement électrique d'affichage de position selon une des revendications précédentes, caractérisé en ce que le support de composants (6) est produit en une pièce et avantageusement en matière plastique.

10. Equipement électrique d'affichage de position selon une des revendications précédentes, caractérisé en ce que les éléments de commande (4) relevant la position de l'élément mobile sont des interrupteurs à rouleaux (fig. 1 et 2).

11. Equipement électrique d'affichage de position selon une des revendications 1 à 9, caractérisé en ce que les éléments de commande (4) relevant la position de l'élément mobile (3) sont des interrupteurs de proximité (30) (fig. 6 et 7).

12. Equipement électrique d'affichage de position selon la revendication 11, caractérisé en ce que les interrupteurs de proximité (30) présentent des initiateurs de proximité et qu'une partie amplificatrice (31) est intégrée dans le câble de liaison (32) des initiateurs de proximité et ce éloignée de ce dernier.

13. Equipement électrique d'affichage de position selon une des revendications précédentes, caractérisé en ce que le support de composants (6) avec les composants y montés est entouré d'une pièce de boîtier sous forme de godet (11) qui présente une section carrée correspondant au corps de base (2) et qui est fixée sur le corps de base (2).

14. Equipement électrique d'affichage de position selon la revendication 13, caractérisé en ce que la pièce de boîtier sous forme de godet (11) est transparente.

15. Equipement électrique d'affichage de position selon la revendication 13 ou 14, caractérisé en ce que la pièce de boîtier sous forme de godet (11) est fabriquée en matière plastique.
